# EUROPÄISCHE PATENTSCHRIFT

(11) **EP 1 924 515 B1**
(45) Veröffentlichungstag und Bekanntmachung des Hinweises auf die Patenterteilung: **14.01.2009**
(21) Anmeldenummer: 06791748.4
(22) Anmeldetag: 31.08.2006
(51) Int. Cl.: B65G 47/90, B67C 3/24

(54) **GREIFER FÜR BEHÄLTER**
GRIPPER FOR CONTAINERS
DISPOSITIF DE PREHENSION POUR RECIPIENT

(30) Priorität: 03.09.2005 DE 102005041929
(43) Veröffentlichungstag der Anmeldung: 28.05.2008
(73) Patentinhaber: KRONES AG, 93073 Neutraubling (DE)
(72) Erfinder: BURGMEIER, Berthold, 89561 Dischingen/Eglingen (DE)
(74) Vertreter: Grünecker, Kinkeldey, Stockmair & Schwanhäusser Anwaltssozietät
(86) Internationale Anmeldenummer: PCT/EP2006/008505
(87) Internationale Veröffentlichungsnummer: WO 2007/025747

(56) Entgegenhaltungen:
- EP-A- 1 375 395
- EP-A2- 0 858 963
- JP-A- 2 190 229
- DATABASE WPI Section PQ, Week 1984 Derwent Publications Ltd., London, GB; Class P62, AN 028803[05] XP002233222 "Industrial Robot Gripper" & SU 1 007 968 A (ZHARKOV G E) 30. März 1983 (1983-03-30)

## Beschreibung

Die Erfindung betrifft einen Greifer der im Oberbegriff des Patentanspruchs 1 angegebenen Art.

Solche Greifer, sogenannte Klammergreifer, werden in Gefäßtransportsystemen oder Gefäßbehandlungssystemen in mechanisch gesteuerten Ausführungen oder ungesteuerten, durch das Einbringen und Ausbringen der Behälter betätigten Ausführungen verwendet. Mechanisch gesteuerte Klammergreifer sind beispielsweise aus EP 0 659 683 A bekannt. Von Behältern betätigte Klammergreifer sind aus DE 297 13 510 U bekannt. Die Greifer werden häufig durch einen Kraftspeicher z.B. in Greifschwenkrichtung beaufschlagt, wobei der Kraftspeicher Elastomer-, Spiral- oder Schraubendruckfedern umfassen kann.

Behältertransportsysteme, insbesondere Flaschen-Transportsysteme, müssen hohe Anforderungen bezüglich der mikrobiologischen Verhältnisse und der Reinigung erfüllen, und über lange Standzeiten und bei hohen Arbeitsfrequenzen betriebssicher sein. Wegen der Nachteile mechanischer Federn ist in der Flaschentransport-Technik schon vorgeschlagen worden, magnetisch kooperierende Permanentmagneten als magnetische Federn zu verwenden, die hinsichtlich der mikrobiologischen Verhältnisse, der Reinigung und der Standzeiten Vorteile bieten.

Wenngleich Permanentmagneten für eine einzige Greifgröße eines Behälters eine exakt einstellbare Greifkraft gewährleisten, haben sie dennoch wie mechanische Federn den Nachteil, bei Verwendung ein- und desselben Greifers für unterschiedliche Greifgrößen von Behältern innerhalb eines vorbestimmten Greifbereiches aufgrund einer progressiven oder degressiven Kennlinie keine gleichbleibenden Greifkräfte zu erzeugen. Es wäre jedoch wünschenswert, unabhängig von der jeweiligen Greifgröße jeden Behälter mit derselben Greifkraft zu klammern. Erfahrungsgemäß variiert die Greifgröße im Greifbereich beispielsweise zwischen Durchmessern von etwa 24 mm bis 38 mm, insbesondere bei Kunststoff-Flaschen wie PET-Flaschen. Das Problem der mit unterschiedlichen Greifgrößen der Behälter variierenden Greifkräfte ein- und desselben Greifers ließ sich bisher nicht lösen.

SU 1 007 968 A (DATABASE WPI AN 028803[05] XP002233222 "Industrial Robot Gripper") betrifft einen Greifer, dessen erste und zweite Greiferarme an Greiferarmverlängerungen erste und zweite, einander anziehende Permanentmagneten entgegengesetzter Polaritäten tragen. Mittels eines Kolbens ist ein dritter Permanentmagnet aus zwei Permanentmagnet-körpem mit entgegengesetzten aktiven Polaritäten zwischen die ersten und zweiten Permanentmagneten bewegbar, der diese magnetisch voneinander wegdrückt und die Greiferarme in die Greifstellung schwenkt. Wenn der dritte Permanentmagnet zunehmend weiter zwischen die ersten und zweiten Permanentmagneten geschoben wird, lässt sich die magnetisch erzeugte Greifkraft einstellen.

EP 1 375 395 A betrifft einen Flaschen-Greifer mit ersten und zweiten Greiferarmen, deren Schwenkbewegung über einen Nocken an einem die Greiferarmverlängerungen koppelnden Lenkermechanismus gesteuert werden. Zusätzlich sind im Lenkermechanismus erste und zweite Permanentmagneten angeordnet, die die Greifarme in der Greifstellung zusätzlich beaufschlagen

Der Erfindung liegt die Aufgabe zugrunde, einen Greifer der eingangs genannten Art anzugeben, der unabhängig von den unterschiedlichen Greifgrößen der Behälter mit einer einfachen Ausbildung eines magnetischen Schließmechanismus eine zumindest im Wesentlichen gleiche Greifkraft zum sicheren Halten der Behälter aufbringt.

Die gestellte Aufgabe wird mit den Merkmalen des Patentanspruchs 1 gelöst.

Durch die Kombination gleichzeitig wirkender, einander abstoßender und einander anziehender Permanentmagneten, derart, dass bei Relativbewegungen der Permanentmagneten die Summe der Abstoß- und Anzugskräfte zumindest im Wesentlichen konstant ist, wenn sich die Greiferarme voneinander weg oder zueinander hin bewegen, wird innerhalb des Greifbereiches bei unterschiedlichen Greifgrößen stets die gleiche Greifkraft erzeugt. Im selben Maß wie der Anteil der aus z.B. einer Abstoßkraft resultierenden Greifkraft abnimmt, nimmt der Anteil der aus z.B. einer Anzugskraft resultierenden Greifkraft zu. Behälter unterschiedlicher Greifgrößen werden so in gleicher Weise sicher gehalten. Die ersten und zweiten Permanentmagneten mit gleichen, einander abstoßenden Polaritäten oder entgegengesetzten, einander anziehenden Polaritäten können mit den Greiferarmen oder Greiferarmverlängerungen verbunden sein. Der dritte Permanentmagnet ist auf einen der ersten und zweiten Permanentmagneten ausgerichtet. Dieser dritte Permanentmagnet hat bei ersten und zweiten einander abstoßenden Permanentmagneten die entgegengesetzte Polarität und bei ersten und zweiten einander anziehenden Permanentmagneten die gleiche Polarität wie der erste oder der zweite Permanentmagnet. Nähern sich zwei einander abstoßende Permanentmagneten unter Vergrößerung der Abstoßkraft, nimmt gleichzeitig durch die relative Entfernung der einander anziehenden Permanentmagneten die Anzugskraft entsprechend ab, und umgekehrt. Hierbei ist es zweckmäßig, den dritten Permanentmagneten entweder stationär zu lagern, während sich die ersten und zweiten Permanentmagneten mit den Greiferarmen bzw. den Greiferarmverlängerungen bewegen, wenn die Greiferarme schwenken, oder den dritten Permanentmagneten mit einem dritten, schwenkbar gelagerten, mit dem zweiten Greiferarm gegensinnig drehgekoppelten Greiferarm oder dessen Greiferarmverlängerung zu verbinden. Der dritte Greiferarm ist zweckmäßig, um bei unterschiedlichen Greifgrößen der Behälter das Zentrum jedes ergriffenen Behälters an derselben Position z.B. in Bezug auf die Schwenklager der Greiferarme, zu positionieren. Diese Maßnahme ist z.B. in Füllanlagen vorteilhaft, damit das Füllventil jeweils ordnungsgemäß eingeführt werden kann. Damit der dritte Greiferarm korrekt mit den ersten und zweiten Greiferarmen kooperiert, wird er mit einem der ersten und zweiten Greiferarme gegensinnig drehgekoppelt, damit alle Greiferarme relativ zueinander nur vorbestimmte Bewegungen ausführen können. Der dritte Greiferarm ist mit dem zweiten Greiferarm gegensinnig drehgekoppelt. An nur den zweiten Greiferarm oder dessen Greiferarmverlängerung kann der zweite Permanentmagnet angeordnet sein, der aus zwei bipolaren Permanentmagnetkörpern besteht und mit entgegengesetzten aktiven Polaritäten wirkt. Die ersten und dritten Permanentmagneten mit gleichen aktiven Polaritäten jeweils wie die zugewandte aktive Polarität des zweiten Permanentmagneten sind beiderseits des zweiten Permanentmagneten stationär angeordnet. Nur der zweite Permanentmagnet, der aus den beiden Permanentmagnetkörpem, gegebenenfalls mit einem dazwischengesetzten Trennelement, besteht, bewegt sich in diesem Fall mit dem zweiten Greiferarm und relativ zu den anderen, stationären Permanentmagneten. Dabei wird der dritte Greiferarm durch die Magnetkraft z.B. von der Seite der Schwenklager der Greiferarme in einer Richtung zum Eingriff in eine zwischen den ersten und zweiten Greiferarmen definierte Greiföffnung beaufschlagt, um die Zentrierwirkung für den ergriffenen Behälter zu erzeugen.

Zur Unterstützung bzw. zur Vergleichmäßigung des Kraftverlaufs kann sogar ein vierter stationär gelagerter Permanentmagnet auf den ersten Permanentmagneten ausgerichtet sein.

Die Permanentmagneten sind so ausgebildet und angeordnet, dass bei den gegenseitigen Relativbewegungen zwischen den einander abstoßenden und den einander anziehenden Permanentmagneten die Summe der Flussdichten in den Magnetfeldern der Permanentmagneten im Wesentlichen konstant ist, zumindest innerhalb des vorgegebenen Greifbereichs, der die üblichen unterschiedlichen Behältergrößen abdeckt.

Jeder vorgesehene Permanentmagnet ist zweckmäßig bipolar mit einem magnetischen Nordpol und einem magnetischen Südpol. Dabei kann jeder Permanentmagnet gleichzeitig magnetisch mit zwei weiteren, entsprechend platzierten bipolaren Permanentmagneten so kooperieren, dass jeder seiner Pole mit einem Gegenpol (anziehend) oder einem gleichen Pol (abstoßend) eines weiteren Permanentmagneten zusammenwirkt. Unter andere zur Sicherstellung eindeutiger magnetischer Verhältnisse wird einem Konzept der Vorzug gegeben, bei dem ein gleichzeitig mit zwei weiteren Permanentmagneten kooperierender Permanentmagnet aus zwei bipolaren Permanentmagnetkörpern besteht, die mit ihren Gegenpolen zueinander weisen. Diese Gegenpole sind zweckmäßig durch ein dazwischen gesetztes Trennelement getrennt und können von diesem passiviert sein, so dass nur die beiden anderen Pole, deren jeder zu einem weiteren Permanentmagneten weist, magnetisch aktiv sind. Jeder weitere Permanentmagnet, der mit einem Permanentmagneten zusammenwirkt, könnte ein einzelner bipolarer Permanentmagnetkörper sein. Zweckmäßig sind jedoch auch die weiteren Permanentmagneten analog gestaltet, d.h., sie bestehen aus zwei bipolaren Permanentmagnetkörpern, von denen gegebenenfalls nur einer zur magnetischen Kooperation einen aktiven Pol verwendet.

Der erste und dritte (bzw. vierte) Permanentmagnet kann im Hinblick auf eindeutige magnetische Verhältnisse auch jeweils aus zwei Permanentmagnetkörpern bestehen, und braucht zur Zusammenarbeit mit dem zweiten Permanentmagneten jeweils nur eine aktive Polarität oder nur einen aktiven Pol.

Die Greiferarme sollten jeweils gegensinnig drehgekoppelt sein, damit der Greifer eine definierte Greiflage einnimmt. Zur gegensinnigen Drehkopplung können bei den Schwenklagern angeordnete Zahnräder oder Zahnsegmente jeweils paarweise kämmen.

Zum Passivieren der nicht benötigten Pole bzw. Polaritäten der bipolaren Permanentmagnetkörper kann jeweils ein Trennelement dazwischen gesetzt sein. Gegebenenfalls wird auch ein Magnetschlusskörper eingesetzt.

Um eine hohe Leistungsdichte und lange Standzeiten zu erzielen, ist es zweckmäßig, wenn die Permanentmagneten bzw. Permanentmagnetkörper sehr leistungsfähig sind, und zumindest überwiegend seltene Erden oder Ferrit oder chemische Elemente der dritten Gruppe des Periodensystems oder Lanthanoide enthalten.

Die Permanentmagneten bzw. Permanentmagnetkörper können untereinander gleich oder verschieden groß dimensioniert sein. Beispielsweise sind sie kreisrunde Scheiben. Andere geometrische Formen, wie z.B. die eines Würfels, Blocks oder Stabs, sind ebenfalls möglich.

Bei einer Ausführungsform, bei der nur der zweite Permanentmagnet an einer Greiferarmverlängerung angeordnet und die ersten und dritten Permanentmagneten stationär gelagert sind, können die Scheibendurchmesser des zweiten Permanentmagneten kleiner oder größer gewählt werden als die Scheibendurchmesser bei den ersten und dritten Permanentmagneten, vorzugsweise meist größer. Hingegen ist der Scheibendurchmesser beim zweiten Permanentmagneten gegebenenfalls kleiner als bei den ersten und dritten Permanentmagneten, wenn alle drei Permanentmagneten auf Greiferarmverlängerungen angebracht sind.

Im Hinblick auf einwandfreie mikrobiologische Verhältnisse und für Reinigungszyklen mit gegebenenfalls für die Permanentmagneten aggressiven Medien oder wegen für Lebensmittel-Standards kritischen Eigenschaften der Permanentmagneten ist es zweckmäßig, die Permanentmagneten bzw. die Permanentmagnetkörper jeweils in nichtmagnetisches Material, vorzugsweise Edelstahl, einzukapseln.

Anhand der Zeichnungen werden Ausführungsformen des Erfindungsgegenstandes erläutert. Es zeigen:
- Fig. 1: schematisch eine erste Ausführungsform eines Greifers mit zwei Greiferarmen,
- Fig. 2: schematisch eine andere Ausführungsform eines Greifers mit zwei Greiferarmen,
- Fig. 3: schematisch eine weitere Ausführungsform eines Greifers mit zwei Greiferarmen,
- Fig. 4: schematisch eine weitere Ausführungsform eines Greifers mit drei Greiferarmen,
- Fig. 5: schematisch eine weitere Ausführungsform eines Greifers mit drei Greiferarmen,
- Fig. 6: ein Diagramm der Greifkraft oder Magnetkräfte über der Behälter-Greifgröße,
- Fig. 7: eine Draufsicht auf eine konkrete Ausführungsform eines Greifers, etwa entsprechend Fig. 4, und
- Fig. 8: eine Draufsicht auf eine konkrete Ausführungsform eines Greifers, etwa gemäß Fig. 5.

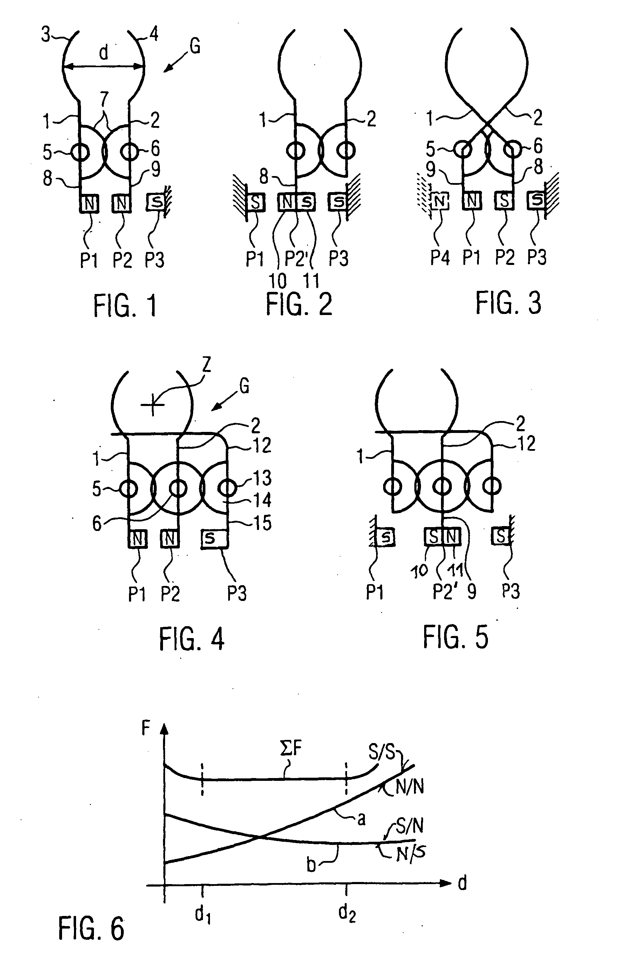

Ein Greifer G, ein sogenannter Klammergreifer für Behältertransportsysteme oder Behälterbehandlungsmaschinen, insbesondere für Flaschen, ist in Fig. 1 schematisiert gezeigt und weist erste und zweite Greiferarme 1, 2 mit eine Greiföffnung definierenden Greifenden 3, 4 auf, die in beabstandeten Schwenklagern 5, 6 schwenkbar gelagert sind und jenseits der Schwenklager Greiferarmverlängerungen 8, 9 besitzen. Die Greiferarme 1, 2 sind beispielsweise in einer Greifstellung für eine Greifgröße d gezeigt. Die beiden Greiferarme 1, 2 sind beispielsweise über bei den Schwenklagern 5, 6 vorgesehene Zahnräder oder Zahnradsegmente 7 gegensinnig drehgekoppelt. An den Greiferarmverlängerungen 8, 9 ist jeweils ein erster Permanentmagnet P1 und ein zweiter Permanentmagnet P2 angebracht. Die ersten und zweiten Permanentmagneten P1, P2 haben einander zugewandt gleiche Polaritäten, z.B. N, und stoßen einander ab. Auf den zweiten Permanentmagneten P2 ist ein dritter, stationärer Permanentmagnet P3 ausgerichtet, dessen aktive Polarität (S) der aktiven Polarität (N) des zweiten Permanentmagneten P2 entgegengesetzt ist, so dass gleichzeitig die zweiten und dritten Permanentmagneten P2, P3 einander anziehen.

Die Permanentmagneten P1, P2 und P3 sind so ausgebildet und angeordnet, dass bei aufgrund der Arbeitsbewegungen des Greifers G auftretenden Relativbewegungen zwischen den Permanentmagneten die Summe der Abstoß- und der Anzugskräfte zumindest im Wesentlichen konstant ist. Dies soll anhand Fig. 6 erläutert werden.

Auf der vertikalen Achse des Diagramms in Fig. 6 ist die Greifkraft F bzw. die von jeweils zwei Permanentmagneten erzeugte Kraft aufgetragen, während die horizontale Achse die Greifgröße d repräsentiert. Mit zunehmender Greifgröße d nimmt die Abstoßkraft (Kurve a; S/S oder N/N) zwischen den ersten und zweiten Permanentmagneten P1, P2 zu. Hingegen nimmt mit zunehmender Greifgröße d gleichzeitig die Anzugskraft zwischen den zweiten und dritten Permanentmagneten P2, P3 (Kurve b, S/N; N/ S) ab. Die Summe (obere Kurve EF in Fig. 6) der Anzugs- und Abstoßkräfte ist innerhalb eines vorbestimmten Greifbereiches, z.B. zwischen d1 und d2, zumindest im Wesentlichen konstant. Beispielsweise überdeckt der Greifbereich d1 bis d2 Flaschengreifgrößen oder -durchmesser zwischen 24 mm und 38 mm (z.B. gemessen am Flaschenhals).

Die Ausführungsform in Fig. 2 weist ebenfalls die ersten und zweiten Greiferarme 1, 2 auf. Nur der erste Greiferarm 1 besitzt eine Greiferarmverlängerung 8, an der der zweite Permanentmagnet P2' angebracht ist, der aus zwei bipolaren Permanentmagnetkörpern 10, 11 besteht, von denen die entgegengesetzten Polaritäten N und S aktiv sind. Der erste und der dritte Permanentmagnet P1, P3 sind auf den zweiten Permanentmagneten P2' ausgerichtet und stationär angeordnet, derart, dass der erste Permanentmagnet P1 und der zweite Permanentmagnet P2' einander anziehen und gleichzeitig der dritte Permanentmagnet P3 und der zweite Permanentmagnet P2' einander abstoßen. Die Wirkung ist gleich wie bei der Ausführungsform in Fig. 1.

Die Ausführungsform in Fig. 3 weist einander überkreuzende erste und zweite Greiferarme 1, 2 auf, deren jeder eine Greiferarmverlängerung 8, 9 besitzt, an denen die ersten und zweiten Permanentmagneten P1, P2 mit entgegengesetzten aktiven Polaritäten N, S angebracht sind. Dem zweiten Permanentmagneten P2 ist der dritte stationär angeordnete Permanentmagnet P3 mit der gleichen aktiven Polarität S zugeordnet. Gegebenenfalls ist sogar ein vierter Permanentmagnet P4 mit der gleichen aktiven Polarität N auf den ersten Permanentmagneten P1 ausgerichtet (gestrichelt angedeutet). Die ersten und zweiten Permanentmagneten P1, P2 ziehen einander an, während gleichzeitig die zweiten und dritten und die ersten und vierten Permanentmagneten einander abstoßen.

In dem Greifer G in Fig. 4 sind wie in Fig. 1 die ersten und zweiten, mit Schwenkarmverlängerungen ausgebildeten Greiferarme 1, 2 in ihren Schwenklagern 5, 6 schwenkbar.

Zusätzlich ist in einem eigenen Schwenklager 13 ein dritter Schwenkarm 12 schwenkbar gelagert. Die Schwenklager 5, 6, 13 befinden sich beispielsweise auf einer Linie. Der dritte Schwenkarm 12 greift in die Greiföffnung zwischen den Greifenden der ersten und zweiten Greiferarme 1, 2 von der Seite der Schwenklager 5, 6, 13 her ein, um einen ergriffenen Behälter unabhängig von der Greifgröße in einem Zentrum Z zu zentrieren. Der dritte Greiferarm 12 überkreuzt die ersten und zweiten Greiferarme 1, 2 und besitzt eine Greiferarmverlängerung 15. An den drei Greiferarmverlängerungen sind bipolare Permanentmagneten P1, P2, P3 angeordnet, wobei die ersten und zweiten Permanentmagneten P1, P2 mit gleichen aktiven Polaritäten N, N aufeinander ausgerichtet sind, während der dritte Permanentmagnet P3 die entgegengesetzte aktive Polarität S hat und auf den zweiten Permanentmagneten P2 ausgerichtet ist.

In der Ausführungsform in Fig. 5 ist analog zu Fig. 4 zusätzlich zu den ersten und zweiten Greiferarmen 1, 2 der dritte Greiferarm 12 vorgesehen. Nur der zweite Greiferarm 2 besitzt die Greiferarmverlängerung 9. Auf dieser Greiferarmverlängerung 9 ist der zweite Permanentmagnet P2' angeordnet, der wie in Fig. 2 aus zwei Permanentmagnetkörper 10, 11 besteht und entgegengesetzte aktive Polaritäten (S, N) hat. Die ersten und dritten Permanentmagneten P1, P3 sind auf den zweiten Permanentmagneten P2 ausgerichtet und jeweils stationär gelagert. Die ersten und zweiten Permanentmagneten P1, P2 stoßen einander ab, während die dritten und zweiten Permanentmagneten P2, P3 einander anziehen.

In den Fig. 1 bis 5 sind die Permanentmagneten symbolisch mit nur einer Polarität gezeigt, obwohl es sich jeweils um bipolare Permanentmagneten oder Permanentmagnetkörper handelt. D.h., es ist jeweils nur die für die Greiferbetätigungsfunktion aktive Polarität (N oder S) angedeutet, hingegen nicht der jeweils andere, gegebenenfalls passivierte Pol oder die passive andere Polarität.

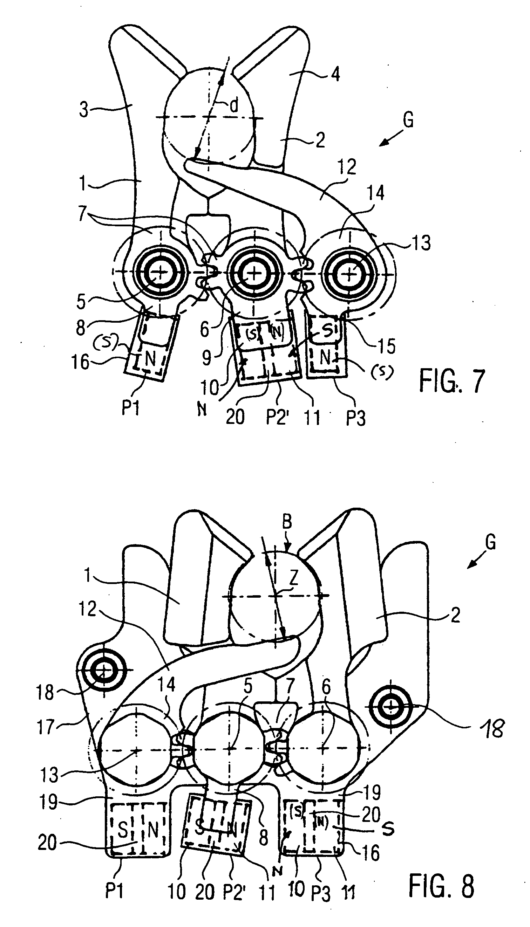

Die in Fig. 7 gezeigte, konkrete Ausführungsform des Greifers G entspricht weitgehend der schematischen Ausführungsform von Fig. 4. Der zweite Permanentmagnet P2' besteht aus zwei bipolaren Permanentmagnetkörpern 10, 11 und ist in einer Einkapselung 16, beispielsweise aus Edelstahl, enthalten. Wie beim zweiten Permanentmagneten P2' angedeutet, kann zwischen den Permanentmagnetkörpern 10, 11 ein Trennelement 20 vorgesehen sein, das die zueinander weisenden Pole ((S) (N)) passiviert, so dass nur die Pole N (nach links) und S (nach rechts) aktiv sind. Die ersten und zweiten Permanentmagneten P1, P2' stoßen einander ab, während die zweiten und dritten Permanentmagneten P2' und P3 einander anziehen. Alle drei Permanentmagneten P1, P2' und P3 bewegen sich mit den Greiferarmen 1, 2, 12. Die ersten und dritten Permanentmagneten P1, P3 bestehen hier nur aus jeweils einem bipolaren, z.B. scheibenförmigen, Permanentmagnetkörper und haben jeweils nur eine aktive Polarität.

Bei der konkreten Ausführungsform des Greifers G in Fig. 8, der im Wesentlichen dem in Fig. 5 schematisch angedeuteten Greifer entspricht, sind die Schwenklager 5, 6, 13 auf einer Grundplatte 17 angeordnet, die in Befestigungsstellen 18 im Behältertransportsystem oder der Behälterbehandlungsmaschine fixiert wird, z. B. auf dem Rotor einer Flaschenfüllmaschine oder eines Transportsterns. Die Grundplatte weist auf der den Greiferarmen 1, 2 abgewandten Seite zwei vorstehende Widerlager 19 auf, auf denen die ersten und dritten Permanentmagneten P1, P3, jeweils bestehend aus zwei bipolaren Permanentmagnetkörpern 10, 11, stationär angeordnet sind. Der erste Greiferarm 1 besitzt die Greiferarmverlängerung 8, die z.B. nach unten abgekröpft ist und den zweiten Permanentmagneten P2', der aus den zwei bipolaren Permanentmagnetkörpern 10, 11 und dem Trennelement 20 besteht, und entgegengesetzte aktive Polaritäten S, N hat. Auch die ersten und dritten Permanentmagneten P1, P3 bestehen bei dieser Ausführungsform jeweils aus zwei bipolaren Permanentmagnetkörpern 10, 11 und einem Trennelement 20 in Einkapselungen 16.

Die vorbeschriebenen Greifer G können gesteuert oder ungesteuert sein. Ungesteuert bedeutet, dass sie durch das Einführen des Behälters B gegen die Greifkraft geöffnet werden und die Greifstellung selbsttätig einnehmen, und zum Entnehmen des Behälters durch Keilwirkung auseinandergezwängt werden. Alternativ könnten die dargestellten Greifer jedoch auch mechanisch gesteuert werden (nicht gezeigt), d.h., z.B. durch eine Kulissen-oder Nockensteuerung gegen die Greifkraft geöffnet und unter der Greifkraft geschlossen werden, um einen Behälter B einführen oder entnehmen zu können.

Die Permanentmagneten sind so ausgebildet und angeordnet, dass die Summe der Flussdichten in den Magnetfeldern bei Relativbewegungen zumindest innerhalb des vorbestimmten Greifbereichs d1 bis d2 im Wesentlichen konstant ist. Im Ergebnis ist deshalb die auf den Behälter B ausgeübte Greifkraft zumindest im Wesentlichen stets dieselbe, unabhängig davon, welche Greifgröße der Behälter B hat.

Die Permanentmagnetkörper 10, 11 sind beispielsweise kreisrunde Scheiben, deren Durchmesser und Dicken gleich oder verschieden sein können. Es handelt sich bevorzugt um sehr leistungsfähige Permanentmagneten, die z.B. unter Verwendung seltener Erden hergestellt sind.

Anstelle der vorbeschriebenen schwenkbaren Anordnung der Greifarme ist beispielsweise auch eine parallel verschiebbare Lagerung möglich. Ferner kann ein Greifarm feststehend und nur der andere, magnetisch beaufschlagte Greifarm beweglich vorgesehen sein.

## Patentansprüche

1. Greifer (G) für Behälter (B), insbesondere für Flaschen in Behältertransportsystemen oder Behälterbehandlungsmaschinen, mit mindestens ersten und zweiten relativ zueinander beweglichen Greiferarmen (1, 2), die durch zumindest erste, zweite und dritte magnetisch zusammenwirkende, aufeinander ausgerichtete Permanentmagneten (P1, P2, P2', P3, P4) in Greifrichtung beaufschlagt sind, wobei gleichzeitig einander abstoßende und einander anziehende Permanentmagneten derart ausgebildet und durch die Arbeitsbewegung des Greifers (G) relativ zueinander bewegbar angeordnet sind, dass die in Greifrichtung auf die Greiferarme (1, 2) wirkend Summe der Abstoß- und Anzugskräfte innerhalb eines vorbestimmten, unterschiedliche Behältergreifgrößen abdeckenden Greifbereichs (d1 bis d2) im Wesentlichen konstant ist, **dadurch gekennzeichnet, dass** von den ersten und zweiten Permanentmagneten (P1, P2', P2) mit gleichen, einander abstoßenden Polaritäten (N, N; S, S) oder entgegengesetzten, einander anziehenden Polaritäten (N, S; S, N) wenigstens der zweite Permanentmagnet (P2, P2') mit einem der ersten und zweiten Greiferarm (1, 2) oder dessen Greiferarmverlängerung (8, 9) verbunden ist, dass der dritte, auf den zweiten Permanentmagneten (P2, P2') ausgerichtete Permanentmagnet (P3) bei einander abstoßenden ersten und zweiten Permanentmagneten mit der entgegengesetzten und bei einander anziehenden ersten und zweiten Permanentmagneten mit der gleichen Polarität wirkt, wie der zugeordnete zweite Permanentmagnet, dass der dritte Permanentmagnet (P3) entweder stationär gelagert ist, oder mit einem dritten, schwenkbar gelagerten Greiferarm (12) oder dessen Greiferarmverlängerung (15) verbunden ist, mit dem zweiten Greiferarm (2) gegensinnig drehgekoppelt und durch die Magnetkraft von der Seite von Schwenklagern (5, 6, 13) der Greiferarme (1, 2, 12) in einer Richtung zum Eingriff in eine zwischen den ersten und zweiten Greiferarmen (1, 2) definierte Greiföffnung beaufschlagt ist.

2. Greifer nach Anspruch 1, **dadurch gekennzeichnet, dass** ein vierter Permanentmagnet (P4) mit der gleichen oder der entgegengesetzten Polarität auf den ersten, am ersten Greiferarm (1) oder dessen Greiferarmverlängerung (8) angeordneten, Permanentmagneten (P1, P2) ausgerichtet und stationär gelagert ist.

3. Greifer nach Anspruch 1, **dadurch gekennzeichnet, dass** der zweite an den zweiten Greiferarm (2) oder dessen Greiferarmverlängerung (9) angeordnete Permanentmagnet (P2') aus zwei bipolaren Permanentmagnetkörpern (10, 11) besteht und entgegengesetzte aktive Polaritäten aufweist, und dass die ersten und dritten Permanentmagneten (P1, P3) mit gleicher aktiver Polarität wie die des jeweils zugewandten bipolaren Permanentmagnetkörpers (10,11) des zweiten Permanentmagneten (P2') an beiden Seiten des zweiten Permanentmagneten (P2') stationär angeordnet sind.

4. Greifer nach Anspruch 3, **dadurch gekennzeichnet, dass** die ersten und dritten Permanentmagneten (P1, P3) aus jeweils zwei bipolaren Permanentmagnetkörpern bestehen und entgegengesetzte aktive Polaritäten aufweisen.

5. Greifer nach wenigstens einem der vorhergehenden Ansprüche, **dadurch gekennzeichnet, dass** die Greiferarme (1, 2, 12) jeweils paarweise gegensinnig über in Schwenklagern (5, 6, 13) angeordnete, kämmende Zahnräder oder Zahnradsegmente (7, 14) drehgekoppelt sind.

6. Greifer nach den Ansprüchen 3 oder 4, **dadurch gekennzeichnet, dass** in jedem aus zwei bipolaren Permanentmagnetkörpern (10, 11) bestehenden Permanentmagneten (P1, P2', P3, P4) zwischen den entgegengesetzte Polaritäten aufweisenden Polen der bipolaren Permanentmagnetkörper (10, 11) wenigstens ein Trennelement (20) vorgesehen ist.

7. Greifer nach wenigstens einem der vorhergehenden Ansprüche, **dadurch gekennzeichnet, dass** die Permanentmagneten bzw. die bipolaren Permanentmagnetkörper (10, 11) zumindest überwiegend seltene Erden wie Neodym, Samarium, etc. oder Ferrit oder chemische Element der dritten Gruppe des Periodensystems oder Lanthanoide enthalten.

8. Greifer nach wenigstens einem der vorhergehenden Ansprüche, **dadurch gekennzeichnet, dass** die Permanentmagneten bzw. die Permanentmagnetkörper gleich groß oder unterschiedliche groß dimensionierte kreisrunde Scheiben sind.

9. Greifer nach Anspruch 8, **dadurch gekennzeichnet, dass** der Scheibendurchmesser beim zweiten Permanentmagneten (P2') kleiner oder größer ist als der beim ersten und dritten Permanentmagneten (P1, P3).

10. Greifer nach wenigstens einem der vorhergehenden Ansprüche, **dadurch gekennzeichnet, dass** die Permanentmagneten bzw. die Permanentmagnetkörper in nichtmagnetisches Material (16), vorzugsweise in Edelstahl, eingekapselt sind.

## Claims

1. Gripper (G) for containers (B), in particular for bottles in container transport systems or container processing machines, having at least first and second gripper arms (1, 2) which are movable relative to one another and which are acted on in a gripping direction by at least first, second and third magnetically interacting permanent magnets (P1, P2, P2', P3, P4) which are aligned towards one another, with mutually repelling and mutually attracting permanent magnets being simultaneously formed, and arranged so as to be movable relative to one another by means of the working movement of the gripper (G), such that the sum of the repelling and attracting forces which acts in the gripping direction of the gripper arms (1, 2) is substantially constant within a predetermined gripping range (d1 to d2) which encompasses different container gripping sizes, **characterized in that**, of the first and second permanent magnets (P1, P2', P2) with identical, mutually repelling polarities (N, N; S, S) or opposite, mutually attracting polarities (N, S; S, N), at least the second permanent magnet (P2, P2') is connected to one of the first and second gripper arms (1, 2) or to the gripper arm extension (8, 9) thereof, **in that** the third permanent magnet (P3), which is aligned towards the second permanent magnet (P2, P2'), acts with the opposite polarity to the associated second permanent magnet in the case of mutually repelling first and second permanent magnets and with the same polarity as the associated second permanent magnet in the case of mutually attracting first and second permanent magnets, **in that** the third permanent magnet (P3) is either mounted so as to be stationary or is connected to a third, pivotably mounted gripper arm (12) or to the gripper arm extension (15) thereof, is rotationally coupled in the opposite sense to the second gripper arm (2) and is acted on by the magnet force, from the side of pivot bearings (5, 6, 13) of the gripper arms (1, 2, 12), in a direction for engagement into a gripping opening which is defined between the first and second gripper arms (1, 2).

2. Gripper according to Claim 1, **characterized in that** a fourth permanent magnet (P4) is aligned, and mounted in a stationary fashion, with the same polarity as or with the opposite polarity to the first permanent magnet (P1, P2) which is arranged on the first gripper arm (1) or on the gripper arm extension (8) thereof.

3. Gripper according to Claim 1, **characterized in that** the second permanent magnet (P2') which is arranged on the second gripper arm (2) or on the gripper arm extension (9) thereof is composed of two bipolar permanent magnet bodies (10, 11) and has opposite active polarities, and **in that** the first and third permanent magnets (P1, P3) are arranged in a stationary fashion, with the same active polarity as that of the respectively facing bipolar permanent magnet body (10, 11) of the second permanent magnet (P2'), at both sides of the second permanent magnet (P2').

4. Gripper according to Claim 3, **characterized in that** the first and third permanent magnets (P1, P3) are composed of in each case two bipolar permanent magnet bodies, and have opposite active polarities.

5. Gripper according to at least one of the preceding claims, **characterized in that** the gripper arms (1, 2, 12) are rotationally coupled in each case in opposite senses in pairs by means of meshing gearwheels or gearwheel segments (7, 14) which are arranged in pivot bearings (5, 6, 13).

6. Gripper according to Claims 3 or 4, **characterized in that**, in each permanent magnet (P1, P2', P3, P4) which is composed of two bipolar permanent magnet bodies (10, 11), at least one dividing element (20) is provided between the poles, which have opposite polarities, of the bipolar permanent magnet bodies (10, 11).

7. Gripper according to at least one of the preceding claims, **characterized in that** the permanent magnets or the bipolar permanent magnet bodies (10, 11) contain at least predominantly rare earths such as neodymium, samarium, etc., or ferrite or chemical elements of the third group of the periodic table or lanthanides.

8. Gripper according to at least one of the preceding claims, **characterized in that** the permanent magnets or the permanent magnet bodies are circular discs which are dimensioned to be of equal size or of different sizes.

9. Gripper according to Claim 8, **characterized in that** the disc diameter in the case of the second permanent magnet (P2') is smaller or greater than that in the case of the first and third permanent magnets (P1, P3).

10. Gripper according to at least one of the preceding claims, **characterized in that** the permanent magnets or the permanent magnet bodies are encapsulated in nonmagnetic material (16), preferably in high-grade steel.

## Revendications

1. Dispositif de préhension (G) pour récipient (B), en particulier pour des bouteilles dans des systèmes de transport de récipient ou machines de conditionnement de récipient, avec au moins des premiers et seconds bras de dispositif de préhension (1, 2) mobiles les uns par rapport aux autres, qui sont sollicités par au moins des premiers, deuxièmes et troisièmes aimants permanents (P1, P2, P2', P3, P4) coopérant magnétiquement, alignés les uns sur les autres dans le sens de préhension, des aimants permanents se repoussant et s'attirant en même temps étant réalisés et disposés mobiles les uns par rapport aux autres par le mouvement de travail du dispositif de préhension (G) de sorte que la somme des forces de répulsion et d'attraction agissant dans le sens de préhension sur les bras du dispositif de préhension (1, 2) soit essentiellement constante dans une zone de préhension (d1 à d2) prédéterminée, recouvrant différentes grandeurs de préhension de récipient, **caractérisé en ce qu'**au moins le deuxième aimant permanent (P2, P2') est relié à l'un des premiers et deuxièmes bras de dispositif de préhension (1, 2) ou son prolongement (8, 9) de bras de dispositif de préhension par les premiers et deuxièmes aimants permanents (P1, P2', P2) présentant des polarités (N, N ; S, S) identiques, se repoussant ou des polarités (N, S ; S, N) opposées, s'attirant, **en ce que** le troisième aimant permanent (P3) aligné sur le deuxième aimant permanent (P2, P2') agit en cas de premiers et deuxièmes aimants permanents se repoussant présentant la polarité opposée et en cas de premiers et deuxièmes aimants permanents s'attirant avec la même polarité que le deuxième aimant permanent associé, **en ce que** le troisième aimant permanent (P3) est logé de manière stationnaire, ou est relié à un troisième bras de dispositif de préhension (12) logé à pivotement ou son prolongement de bras de dispositif de préhension (15), est couplé en rotation dans le sens contraire au deuxième bras de dispositif de préhension (2) et est sollicité par la force magnétique du côté des paliers de pivotement (5, 6, 13) des bras de dispositif de préhension (1, 2, 12) dans un sens pour l'engagement dans une ouverture de préhension définie entre les premiers et deuxièmes bras de dispositif de préhension (1, 2).

2. Dispositif de préhension selon la revendication 1, **caractérisé en ce qu'**un quatrième aimant permanent (P4) présentant la même polarité ou opposée est aligné et est logé de manière stationnaire sur le premier aimant permanent (P1, P2), disposé sur le premier bras de dispositif de préhension (1) ou son prolongement de bras de dispositif de préhension (8).

3. Dispositif de préhension selon la revendication 1, **caractérisé en ce que** le deuxième aimant permanent (P2') disposé sur le deuxième bras de dispositif de préhension (2) ou son prolongement de bras de dispositif de préhension (9) se compose de deux corps d'aimant permanent (10, 11) bipolaires et présente des polarités actives opposées, et **en ce que** les premiers et troisièmes aimants permanents (P1, P3) présentant la polarité active identique à celle du corps d'aimant permanent (10, 11) bipolaire tourné respectivement du deuxième aimant permanent (P2') sont disposés de manière stationnaire des deux côtés du deuxième aimant permanent (P2').

4. Dispositif de préhension selon la revendication 3, **caractérisé en ce que** les premiers et troisièmes aimants permanents (P1, P3) se composent respectivement de deux corps d'aimant permanent bipolaires et présentent des polarités actives opposées.

5. Dispositif de préhension selon au moins l'une quelconque des revendications précédentes, **caractérisé en ce que** les bras de dispositif de préhension (1, 2, 12) sont couplés en rotation respectivement par paire dans le sens contraire par des roues dentées ou segments de roue dentée (7, 14) s'engrenant, disposés dans des paliers de pivotement (5, 6, 13).

6. Dispositif de préhension selon les revendications 3 ou 4, **caractérisé en ce que** dans chaque aimant permanent (P1, P2', P3, P4) se composant de deux corps d'aimant permanent (10, 11) bipolaires entre les pôles présentant des polarités opposées des corps d'aimant permanent (10, 11) bipolaires est prévu au moins un élément de séparation (20).

7. Dispositif de préhension selon au moins l'une quelconque des revendications précédentes, **caractérisé en ce que** les aimants permanents ou les corps d'aimant permanent (10, 11) bipolaires contiennent au moins principalement des terres rares telles que du néodyme, du samarium, etc. ou du ferrite ou un élément chimique du troisième groupe de la classification périodique des éléments ou des lanthanides.

8. Dispositif de préhension selon au moins l'une quelconque des revendications précédentes, **caractérisé en ce que** les aimants permanents ou les corps d'aimant permanent sont des disques circulaires de taille identique ou différente.

9. Dispositif de préhension selon la revendication 8, **caractérisé en ce que** le diamètre de disque du deuxième aimant permanent (P2') est plus petit ou plus grand que celui des premiers et troisièmes aimants permanents (P1, P3).

10. Dispositif de préhension selon au moins l'une quelconque des revendications précédentes, **caractérisé en ce que** les aimants permanents ou les corps d'aimant permanent sont insérés dans du matériau (16) non magnétique, de préférence dans de l'acier spécial.
